(19) **Europäisches Patentamt / European Patent Office / Office européen des brevets**

(11) **EP 3 640 288 A1**

(12) **EUROPEAN PATENT APPLICATION**

(43) Date of publication:
**22.04.2020 Bulletin 2020/17**

(51) Int Cl.:
***C08J 9/14*** (2006.01)     ***C08L 61/04*** (2006.01)

(21) Application number: **19211174.8**

(22) Date of filing: **23.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 JP 2015061588**

(62) Document number(s) of the earlier application(s) in accordance with Art. 76 EPC:
**16768060.2 / 3 275 926**

(71) Applicant: **Asahi Kasei Construction Materials Corporation**
**Tokyo 101-8101 (JP)**

(72) Inventors:
• **IHARA, Ken**
**Tokyo, 101-8101 (JP)**
• **MUKAIYAMA, Shigemi**
**Tokyo, 101-8101 (JP)**
• **HAMAJIMA, Masato**
**Tokyo, 101-8101 (JP)**
• **MIHORI, Hisashi**
**Tokyo, 101-8101 (JP)**
• **FUKASAWA, Yoshihito**
**Tokyo, 101-8101 (JP)**

(74) Representative: **Strehl Schübel-Hopf & Partner**
**Maximilianstrasse 54**
**80538 München (DE)**

Remarks:
This application was filed on 25-11-2019 as a divisional application to the application mentioned under INID code 62.

(54) **PHENOLIC RESIN FOAM AND METHOD OF PRODUCING SAME**

(57) Provided are a phenolic resin foam that has low environmental impact, can maintain excellent thermal insulation performance over the long-term, and reduces condensation inside walls associated with increased water vapor permeation, and also a method of producing the same. The phenolic resin foam contains a phenolic resin and a volatile compound including at least one hydrocarbon and at least one selected from the group consisting of a chlorinated hydrofluoroolefin, a non-chlorinated hydrofluoroolefin, and a halogenated hydrocarbon. The phenolic resin foam has a density of at least 22 kg/m$^3$ and no greater than 50 kg/m$^3$, an average cell diameter of at least 30 $\mu$m and no greater than 200 $\mu$m, a closed cell ratio of at least 80% and no greater than 99%, a water vapor permeance of at least 0.63 ng/(m·s·Pa) and no greater than 1.25 ng/(m.s.Pa), and a proportion of the hydrocarbon relative to the total amount of the volatile compound of at least 5 mass%.

**EP 3 640 288 A1**

**Description**

TECHNICAL FIELD

This disclosure relates to a phenolic resin foam and a method of producing the same.

BACKGROUND

In recent years, there has been demand for improvement of the air-tightness performance and thermal insulation performance of housing for reasons such as increased awareness of energy efficiency and compulsory adoption of next generation energy efficiency standards. This demand for improved housing air-tightness performance and thermal insulation performance is expected to require an increase in the thickness of insulating materials. However, increasing the thickness of insulating materials is problematic as it necessitates design changes in consideration of reduction of indoor living space and limitations on the space inside walls. Moreover, since insulating materials are typically installed inside walls and are, therefore, extremely difficult to replace after installation, insulating materials are required to maintain thermal insulation performance over the long-term.

Examples of known insulating materials for housing include fibrous insulating materials such as glass wool and rock wool, and foamed plastic insulating materials obtained through foaming of styrene resin, urethane resin, and phenolic resin. The thermal insulation performance of foamed plastic insulating materials is known to be significantly influenced by the type and state of compounds encapsulated within cells of the foamed plastic.

Chlorofluorocarbons (CFCs) having low gas thermal conductivity have conventionally been used as such encapsulated compounds in foamed plastic insulating materials. However, CFCs make a significant contribution to depletion of the ozone layer and climate change, and the use thereof was abolished through adoption of the Montreal Protocol in 1987. Consequently, there has been a change toward hydrofluorocarbons (HFCs) and the like having comparatively low ozone depletion potential for use as such encapsulated compounds. However, since many HFCs have high global warming potential, there is demand for change to compounds having even lower ozone depletion potential and global warming potential.

Hydrocarbon compounds are excellent candidates for use as such compounds from a viewpoint of environmental protection since they have extremely low ozone depletion potential and global warming potential. However, one issue with hydrocarbon compounds is that they have high thermal conductivity compared to conventionally used CFC compounds.

PTL 1 and PTL 2 disclose a compound including an unsaturated halogenated hydroolefin having low or zero ozone depletion potential and low global warming potential.

CITATION LIST

Patent Literature

PTL 1: JP 2013-64139 A
PTL 2: JP 2010-522819 A

SUMMARY

(Technical Problem)

However, PTL 1 and PTL 2 only provide examples in which the compound including an unsaturated halogenated hydroolefin is used in polyurethane resin foam or polyisocyanurate resin foam, and do not describe any examples in which the compound is used in phenolic resin foam.

The inventors conducted extensive research into the use of such compounds in phenolic resin foam. Through this research, it became clear that although PTL 1 and PTL 2 disclose many halogenated hydroolefins, these halogenated hydroolefins are highly polar compounds, and thus when they are used in phenolic resin foam, phenolic resin including hydrophilic groups in the form of hydroxy groups is plasticized thereby, which may increase the cell diameter and lower the closed cell ratio of the phenolic resin foam. Accordingly, research conducted by the inventors demonstrated that although environmental impact can be reduced when a compound including a halogenated hydroolefin is used in production of phenolic resin foam, there is an issue in terms of increased thermal conductivity due to an increase in cell diameter and a decrease in closed cell ratio, and thus the phenolic resin foam may not display excellent thermal insulation performance over the long-term. Moreover, an increase in cell diameter is accompanied by a decrease in the number of cell walls per unit thickness of the phenolic resin foam, a decrease in closed cell ratio, and so forth, which increases water vapor permeation. Consequently, in housing having such phenolic resin foam installed as internal thermal insulation, water vapor generated indoors during the winter permeates through the phenolic resin foam to a greater degree, leading to the occurrence of condensation inside walls at the exterior of the housing and raising the health risk due to mold or the like.

Accordingly, an objective of the present disclosure is to provide a phenolic resin foam that has low environmental impact (i.e., low or zero ozone depletion potential and low global warming potential), can maintain excellent thermal insulation performance over the long-term, and reduces condensation inside walls associated with increased water vapor permeation, and also to provide a method of producing the same.

(Solution to Problem)

As a result of extensive and diligent research conducted to achieve the objective set forth above, the inventors discovered that a phenolic resin foam that has low environmental impact, can maintain excellent thermal insulation performance over the long-term, and reduces condensation inside walls associated with increased water vapor permeation can be provided through inclusion, in the phenolic resin foam, of a phenolic resin and at least one selected from the group consisting of a chlorinated hydrofluoroolefin, a non-chlorinated hydrofluoroolefin, and a halogenated hydrocarbon, and by setting the density, average cell diameter, closed cell ratio, and water vapor permeance of the phenolic resin foam within specific ranges. The inventors completed the disclosed techniques based on this discovery.

Specifically, the present disclosure provides [1] to [8] set forth below.

[1] A phenolic resin foam comprising a phenolic resin and at least one selected from the group consisting of a chlorinated hydrofluoroolefin, a non-chlorinated hydrofluoroolefin, and a halogenated hydrocarbon, wherein the phenolic resin foam has a density of at least 20 kg/m³ and no greater than 100 kg/m³, the phenolic resin foam has an average cell diameter of at least 10 μm and no greater than 300 μm, the phenolic resin foam has a closed cell ratio of at least 80% and no greater than 99%, and the phenolic resin foam has a water vapor permeance of at least 0.38 ng/(m·s·Pa) and no greater than 2.00 ng/(m·s·Pa).

[2] The phenolic resin foam according to the foregoing [1], wherein the chlorinated hydrofluoroolefin is at least one selected from the group consisting of 1-chloro-3,3,3-trifluoropropene and 2-chloro-3,3,3-trifluoropropene, and the non-chlorinated hydrofluoroolefin is at least one selected from the group consisting of 1,3,3,3-tetrafluoro-1-propene, 2,3,3,3-tetrafluoro-1-propene, and 1,1,1,4,4,4-hexafluoro-2-butene.

[3] The phenolic resin foam according to the foregoing [1] or [2], wherein the halogenated hydrocarbon is isopropyl chloride.

[4] The phenolic resin foam according to any one of the foregoing [1] to [3], further comprising a hydrocarbon having a carbon number of no greater than 6.

[5] The phenolic resin foam according to any one of the foregoing [1] to [4], having an initial thermal conductivity of less than 0.0200 W/m·K.

[6] The phenolic resin foam according to any one of the foregoing [1] to [5], having a thermal conductivity after 14 days in a 110°C atmosphere of less than 0.0210 W/m.K.

[7] The phenolic resin foam according to any one of the foregoing [1] to [6], further comprising an inorganic compound.

[8] A method of producing a phenolic resin foam, for use in producing the phenolic resin foam according to the foregoing [1], comprising foaming and curing, on a surface material, a foamable phenolic resin composition containing a phenolic resin, a surfactant, a curing catalyst, and a volatile compound including at least one selected from the group consisting of a chlorinated hydrofluoroolefin, a non-chlorinated hydrofluoroolefin, and a halogenated hydrocarbon, wherein the phenolic resin has a weight average molecular weight Mw of at least 400 and no greater than 3,000 as determined by gel permeation chromatography, the phenolic resin has a viscosity at 40°C of at least 1,000 mPa·s and no greater than 100,000 mPa·s, the volatile compound has a boiling point average value of at least -30°C and no higher than 45°C, and a discharge temperature of the foamable phenolic resin composition and the boiling point average value of the volatile compound satisfy a relationship:

$$0.0002X^3 + 0.006X^2 + 0.07X + 17 \le Y \le 0.00005X^3 + 0.003X^2 + 0.08X + 52$$

where X represents the boiling point average value of the volatile compound in °C and Y represents the discharge temperature of the foamable phenolic resin composition in °C.

(Advantageous Effect)

The disclosed phenolic resin foam has low environmental impact, can maintain excellent thermal insulation performance over the long-term, and can reduce condensation inside walls associated with increased water vapor permeation as a result of having the configuration set forth above. Moreover, the disclosed method of producing a phenolic resin foam enables simple production of the disclosed phenolic resin foam having the configuration set forth above.

DETAILED DESCRIPTION

The following provides a detailed description of a disclosed embodiment (hereinafter, also referred to as "the present embodiment"). However, the disclosed techniques are not limited to the following embodiment.

A phenolic resin foam according to the present embodiment contains a phenolic resin and at least one selected from the group consisting of a chlorinated hydrofluoroolefin, a non-chlorinated hydrofluoroolefin, and a halogenated hydrocarbon. The phenolic resin foam has a density of at least 20 kg/m$^3$ and no greater than 100 kg/m$^3$, an average cell diameter of at least 10 $\mu$m and no greater than 300 $\mu$m, a closed cell ratio of at least 80% and no greater than 99%, and a water vapor permeance of at least 0.38 ng/(m·s·Pa) and no greater than 2.00 ng/(m·s·Pa).

In the present specification, the term "compound $\alpha$" may be used to refer to a compound or mixture composed of at least one selected from the group consisting of a chlorinated hydrofluoroolefin, a non-chlorinated hydrofluoroolefin, and a halogenated hydrocarbon. The phenolic resin foam containing the compound $\alpha$ has low environmental impact because the compound $\alpha$ has low or zero ozone depletion potential and low global warming potential (i.e., the compound $\alpha$ has low environmental impact).

No specific limitations are placed on the chlorinated hydrofluoroolefin, but from a viewpoint of low thermal conductivity, foaming properties, and environmental impact, at least one selected from the group consisting of 1-chloro-3,3,3-trifluoropropene and 2-chloro-3,3,3-trifluoropropene is preferable. Moreover, no specific limitations are placed on the non-chlorinated hydrofluoroolefin, but from a viewpoint of low thermal conductivity, foaming properties, and environmental impact, 1,3,3,3-tetrafluoro-1-propene, 2,3,3,3-tetrafluoro-1-propene, 1,1,1,4,4,4-hexafluoro-2-butene, and the like are preferable.

Furthermore, no specific limitations are placed on the halogenated hydrocarbon, but from a viewpoint of low thermal conductivity, volatile compound boiling point, and environmental impact, a halogenated hydrocarbon that includes at least one hydrogen atom, a halogenated hydrocarbon that does not include more than one type of halogen atom, or a halogenated hydrocarbon that does not include a fluorine atom is preferable, and isopropyl chloride is more preferable.

The phenolic resin foam according to the present embodiment may further contain a hydrocarbon.

The hydrocarbon may, for example, be a hydrocarbon having a carbon number of no greater than 6. Specific examples of the hydrocarbon having a carbon number of no greater than 6 include normal butane, isobutane, cyclobutane, normal pentane, isopentane, cyclopentane, neopentane, normal hexane, isohexane, 2,2-dimethylbutane, 2,3-dimethylbutane, and cyclohexane. Of these hydrocarbons, a pentane such as normal pentane, isopentane, cyclopentane, or neopentane, or a butane such as normal butane, isobutane, or cyclobutene is preferable. One hydrocarbon may be used individually, or two or more hydrocarbons may be used in combination.

Although no specific limitations are made, the phenolic resin foam according to the present embodiment may, for example, contain a single compound composed of one type of the compound $\alpha$, may contain a plurality of types of the compound $\alpha$, or may contain at least one type of the compound $\alpha$ and at least one type of the hydrocarbon. Of such examples, a case in which the phenolic resin foam according to the present embodiment contains, for example, at least one type of the compound $\alpha$ and at least one type of the hydrocarbon is preferable in terms that gas permeability is low and thermal insulation performance can be more easily maintained over the long-term. In particular, it is preferable that the phenolic resin foam according to the present embodiment contains a volatile compound including one or two types of the compound $\alpha$ as a first component and the hydrocarbon (for example, a pentane such as cyclopentane or isopentane) as a second component.

In the present specification, the term "volatile compound" may be used to refer to a mixture of the compound $\alpha$ and the hydrocarbon. Note that in a situation in which the phenolic resin foam according to the present embodiment does not contain the hydrocarbon, the term "volatile compound" refers to the compound $\alpha$. At least some of one or more compounds composing the volatile compound are volatilized in production of the phenolic resin foam according to the present embodiment (i.e., in foaming and curing of a foamable phenolic resin composition).

Although no specific limitations are placed on the proportion of the hydrocarbon in the volatile compound, the proportion of the hydrocarbon relative to the total amount (100 mass%) of the volatile compound is, for example, preferably at least 5 mass%, more preferably at least 15 mass%, and even more preferably at least 45 mass% in terms that gas permeability of the phenolic resin is low and thermal insulation performance can be more easily maintained over the long-term.

A boiling point average value of the volatile compound is not specifically limited, but is, for example, preferably at least -30°C and no higher than 45°C, more preferably at least -20°C and no higher than 43°C, even more preferably at least 0°C and no higher than 41°C, particularly preferably at least 10°C and no higher than 39°C, and most preferably at least 19°C and no higher than 38°C. A boiling point average value of lower than -30°C is unfavorable because the foaming rate becomes excessively fast and cell walls tend to rupture during foaming, which may reduce the closed cell ratio and lower long-term thermal insulation performance, whereas a boiling point average value of higher than 45°C is unfavorable because it becomes difficult to obtain sufficient foaming pressure and achieve the desired thickness.

The boiling point average value can be determined according to the following formula (1):

$$\text{Boiling point average value} = p \times Tp + q \times Tq + r \times Tr + \dots \quad (1)$$

(In formula (1), components (P, Q, R, ...) of the target volatile compound have contents p, q, r, ... (mole fraction) and boiling points Tp, Tq, Tr, ... (°C).)

The phenolic resin foam according to the present embodiment may further contain an inorganic compound. Inclusion of an inorganic compound such as aluminum hydroxide, talc, silicon oxide, glass powder, or titanium oxide is beneficial as this tends to reduce the cell diameter and lower thermal conductivity. Of these inorganic compounds, aluminum hydroxide is preferable.

The content of the inorganic compound in the phenolic resin foam is not specifically limited, but relative to the phenolic resin foam (100 mass%) is, for example, preferably at least 0.1 mass% and no greater than 35 mass%, more preferably at least 1 mass% and no greater than 20 mass%, and even more preferably at least 2 mass% and no greater than 15 mass%. An excessively large inorganic compound content (for example, greater than 35 mass%) is unfavorable because a larger amount of volatile compound is necessary to obtain the desired thickness due to higher viscosity during foaming and because initial thermal conductivity tends to be higher due to the inorganic compound itself having high thermal conductivity.

The volume average particle diameter of the inorganic compound is not specifically limited, but is, for example, preferably at least 0.5 $\mu$m and no greater than 500 $\mu$m, more preferably at least 2 $\mu$m and no greater than 100 $\mu$m, and even more preferably at least 5 $\mu$m and no greater than 50 $\mu$m. A volume average particle diameter of smaller than 0.5 $\mu$m tends to result in a small effect with respect to reducing cell diameter, whereas a volume average particle diameter of greater than 500 $\mu$m raises thermal conductivity due to higher solid thermal conductivity.

The type and content of the inorganic compound dispersed in the phenolic resin foam according to the present embodiment can be qualitatively and quantitively determined by X-ray fluorescence analysis, X-ray electron spectroscopy, atomic absorption spectroscopy, Auger electron spectroscopy, or the like after carrying out typical pre-treatment as necessary.

The volume average particle diameter of the inorganic compound dispersed in the phenolic resin foam can be determined by cutting the phenolic resin foam, magnifying under an optical microscope, identifying a finely dispersed substance from the composition by elemental analysis or the like of a small localized section through Auger electron spectroscopy or the like to confirm positions at which particles of the inorganic compound are present, measuring the particle diameters of dispersed particles, calculating the volumes of these particles from their particle diameters by assuming that the particles are approximately spherical, and then determining the volume average particle diameter using the obtained diameters and volumes. The content of the inorganic compound (content of the inorganic compound relative to the foam (100 mass%)) can be determined from the occupation volume of the particles determined as set forth above and the density of the foam.

A silane-based compound or a siloxane-based compound may be further added to the phenolic resin foam according to the present embodiment. These compounds may be used individually or in combination. Examples of silane-based compounds that may be used include hexamethyldisilazane and dimethoxydimethylsilane, and examples of siloxane-based compounds that may be used include hexamethyldisiloxane. Since silane-based compounds and siloxane-based compounds are non-polar, they tend not to mix well with polar phenolic resin. Consequently, foam having a small cell diameter and high closed cell ratio can be obtained since many cell nuclei are formed.

The density of the phenolic resin foam according to the present embodiment is at least 20 kg/m$^3$ and no greater than 100 kg/m$^3$, preferably at least 22 kg/m$^3$ and no greater than 50 kg/m$^3$, more preferably at least 24 kg/m$^3$ and no greater than 40 kg/m$^3$, even more preferably at least 26 kg/m$^3$ and no greater than 35 kg/m$^3$, and most preferably at least 27 kg/m$^3$ and no greater than 30 kg/m$^3$. If the density is less than 20 kg/m$^3$, it is difficult to obtain a highly closed cell structure because the cell walls are thin and tend to rupture during foaming. This results in higher thermal conductivity due to the volatile compound escaping from the foam. On the other hand, a density of greater than 100 kg/m$^3$ lowers thermal insulation performance because solid thermal conductivity due to resin and other solid components is increased.

Note that the density is a value measured by a method described in "(1) Foam density" of the subsequent "Evaluation" section. The density can be adjusted, for example, through the proportion of the volatile compound, the proportion of a curing catalyst, the foaming temperature, the composition and proportion of the phenolic resin, the reaction rate, the viscosity of the phenolic resin, and so forth.

The inventors discovered that in a situation in which a hydrocarbon in a conventional hydrocarbon-containing phenolic resin foam is simply replaced with the compound $\alpha$, an increase in viscosity associated with curing reaction of phenolic resin in a foaming and curing process of the phenolic resin foam is cancelled out by the high miscibility of the compound $\alpha$ with the phenolic resin, leading to a relatively fast cell growth rate. The inventors also discovered that, as a consequence, it is difficult to achieve effects of maintaining excellent thermal insulation performance over the long-term and preventing condensation inside walls associated with increased water vapor permeation when the hydrocarbon is simply replaced with the compound $\alpha$. Through diligent and extensive investigation, the inventors discovered that the cause of the above is related to the average cell diameter, closed cell ratio, and water vapor permeance becoming too high or too low.

The inventors focused on production conditions, and in particular on the use of a phenolic resin having a Mw and viscosity within specific ranges and a volatile compound having a boiling point average value within a specific range. The inventors discovered that it is possible to obtain physical property values such as average cell diameter, closed cell ratio, water vapor permeance, and so forth that are within specific ranges by, for example, setting the temperature at which a foamable phenolic resin composition is discharged within a specific range, and that by satisfying these physical property values, it is possible to achieve effects of maintaining excellent thermal insulation performance over the long-term and preventing condensation inside walls associated with increased water vapor permeation.

The average cell diameter of the phenolic resin foam according to the present embodiment is at least 10 $\mu$m and no greater than 300 $\mu$m, preferably at least 30 $\mu$m and no greater than 200 $\mu$m, more preferably at least 40 $\mu$m and no greater than 150 $\mu$m, even more preferably at least 50 $\mu$m and no greater than 110 $\mu$m, and particularly preferably at least 60 $\mu$m and no greater than 95 $\mu$m. If the average cell diameter is too large (for example, if the average cell diameter is greater than 300 $\mu$m), initial thermal insulation performance tends to be poor due to gas convection inside the cells and reduced heat screening by cell walls, and long-term thermal insulation performance also tends to be poor due to the volatile compound encapsulated in the cells being more easily displaced by air. If the average cell diameter is too small (for example, if the average cell diameter is less than 10 $\mu$m), thermal insulation performance tends to be poor because individual cell walls are thinner, which facilitates the transmission of heat rays.

Note that the average cell diameter is a value measured by a method described in "(2) Average cell diameter" of the subsequent "Evaluation" section. The average cell diameter can be adjusted, for example, through the composition and viscosity of the phenolic resin, the type and proportion of the volatile compound, the curing conditions, the foaming conditions, and so forth.

The closed cell ratio of the phenolic resin foam according to the present embodiment is at least 80% and no greater than 99%, more preferably at least 85% and no greater than 99%, even more preferably at least 90% and no greater than 99%, particularly preferably at least 93% and no greater than 99%, and most preferably at least 95% and no greater than 99%. A closed cell ratio that is too low (for example, a closed cell ratio of less than 80%) is unfavorable because the volatile compound encapsulated in cells is displaced by air more easily, leading to higher long-term thermal conductivity (poorer long-term thermal insulation performance).

Note that the closed cell ratio is a value measured by a method described in "(3) Closed cell ratio" of the subsequent "Evaluation" section. The closed cell ratio can be adjusted, for example, through the composition and viscosity of the phenolic resin, the type and proportion of the volatile compound, the curing conditions, the foaming conditions, and so forth.

The water vapor permeance of the phenolic resin foam according to the present embodiment is at least 0.38 ng/(m·s·Pa) and no greater than 2.00 ng/(m·s·Pa), more preferably at least 0.50 ng/(m·s·Pa) and no greater than 1.50 ng/(m·s·Pa), and even more preferably at least 0.63 ng/(m·s·Pa) and no greater than 1.25 ng/(m·s·Pa). A water vapor permeance that is too low (for example, a water vapor permeance of less than 0.38 ng/(m·s·Pa)) is unfavorable because in a situation in which the phenolic resin foam is in direct contact with a mortar layer, such as in a wet external thermal insulation technique or the like, it is difficult for moisture in the mortar to escape. A water vapor permeance that is too high (for example, a water vapor permeance of greater than 2.00 ng/(m·s·Pa)) is unfavorable because when the phenolic resin foam is installed in housing as internal thermal insulation, water vapor generated indoors during the winter permeates through the phenolic resin foam to a greater degree, which facilitates the formation of condensation at the exterior and increases the health risk due to mold or the like.

Note that the water vapor permeance is a value measured by a method described in "(7) Water vapor permeance" of the subsequent "Evaluation" section. The water vapor permeance can be adjusted, for example, through the proportion of the volatile compound, the proportion of the curing catalyst, the foaming temperature, the composition and proportion of the phenolic resin, the reaction rate, the viscosity of the phenolic resin, and so forth.

The initial thermal conductivity of the phenolic resin foam according to the present embodiment is preferably less than 0.0200 W/m·K, more preferably less than 0.0190 W/m·K, even more preferably less than 0.0180 W/m·K, and particularly preferably less than 0.0170 W/m·K.

Note that the initial thermal conductivity is a value measured by a method described in "(5) Initial thermal conductivity" of the subsequent "Evaluation" section. The initial thermal conductivity can be adjusted, for example, through the composition and proportion of the phenolic resin, the type and proportion of the volatile compound, the curing conditions, the foaming conditions, and so forth.

The thermal conductivity of the phenolic resin foam according to the present embodiment after being left for 14 days in a 110°C environment (hereinafter, also referred to simply as "thermal conductivity after 14 days"), which is the thermal conductivity after accelerated testing corresponding to long-term use or long-term storage, is preferably less than 0.0210 W/m·K, more preferably less than 0.0200 W/m·K, even more preferably less than 0.0190 W/m·K, and particularly preferably less than 0.0180 W/m·K.

Note that the thermal conductivity after 14 days is a value measured by a method described in "(6) Thermal conductivity after 14 days in 110°C atmosphere" of the subsequent "Evaluation" section. The thermal conductivity after 14 days can be adjusted, for example, through the composition and proportion of the phenolic resin, the type and proportion of the volatile compound, the curing conditions, the foaming conditions, and so forth.

Although a thermal conductivity difference between the thermal conductivity after 14 days and the initial thermal conductivity is not specifically limited, this thermal conductivity difference is, for example, preferably less than 0.0020 W/m·K, more preferably less than 0.0017 W/m·K, and even more preferably less than 0.0015 W/m·K.

Note that the thermal conductivity difference between the thermal conductivity after 14 days and the initial thermal conductivity is a value measured by a method described in "(6) Thermal conductivity after 14 days in 110°C atmosphere" of the subsequent "Evaluation" section.

The phenolic resin foam according to the present embodiment can be produced by, for example, foaming and curing a foamable phenolic resin composition containing a phenolic resin and the compound α, and optionally containing a surfactant and a curing catalyst. The foamable phenolic resin composition may further contain the above-described hydrocarbon and inorganic compound, and/or additives such as a plasticizer, a flame retardant, a curing aid, a nitrogen-containing compound, a silane-based compound, and a siloxane-based compound. Moreover, a plasticizer such as a phthalic acid ester may be added to more precisely control the rate of foaming and curing.

The method of producing the phenolic resin foam according to the present embodiment is preferably a method including foaming and curing, on a surface material, a foamable phenolic resin composition containing a phenolic resin, a surfactant, a curing catalyst, and a volatile compound including at least one selected from the group consisting of a chlorinated hydrofluoroolefin, a non-chlorinated hydrofluoroolefin, and a halogenated hydrocarbon, wherein the phenolic resin has a weight average molecular weight Mw of at least 400 and no greater than 3,000 as determined by gel permeation chromatography, the phenolic resin has a viscosity at 40°C of at least 1,000 mPa·s and no greater than 100,000 mPa·s, the volatile compound has a boiling point average value of at least -30°C and no higher than 45°C, and a discharge temperature (units: °C) of the foamable phenolic resin composition and the boiling point average value (units: °C) of the volatile compound satisfy the following relationship:

$$0.0002X^3 + 0.006X^2 + 0.07X + 17 \leq Y \leq 0.00005X^3 + 0.003X^2 + 0.08X + 52$$

where X represents the boiling point average value (°C) of the volatile compound and Y represents the discharge temperature (°C) of the foamable phenolic resin composition.

The phenolic resin according to the present embodiment is, for example, obtained by using a phenyl group-containing compound and an aldehyde group-containing compound, or a derivative thereof, as raw materials, and carrying out polymerization by heating in a temperature range of 40°C to 100°C in the presence of an alkali catalyst. One type of phenolic resin may be used individually, or two or more types of phenolic resins may be used in combination.

Examples of the phenyl group-containing compound that is used in preparation of the phenolic resin include phenol, resorcinol, catechol, o-, m-, and p-cresol, xylenols, ethylphenols, and p-tert-butyl phenol. Of these compounds, phenol and o-, m-, and p-cresol are preferable, and phenol is most preferable. The phenyl group-containing compound may be a compound having a binuclear phenyl group. These phenyl group-containing compounds may be used individually or as a combination of two or more types.

Examples of the aldehyde group-containing compound or derivative thereof that is used in preparation of the phenolic resin include formaldehyde, paraformaldehyde, 1,3,5-trioxane, and tetraoxymethylene. Of these compounds, formaldehyde and paraformaldehyde are preferable. These aldehyde group-containing compounds or derivatives thereof may be used individually or as a combination of two or more types.

The weight average molecular weight Mw of the phenolic resin as determined by gel permeation chromatography according to a method described in "(8) Weight average molecular weight Mw of phenolic resin" of the subsequent "Evaluation" section is, for example, preferably at least 400 and no greater than 3,000, more preferably at least 500 and no greater than 2,500, even more preferably at least 700 and no greater than 2,500, particularly preferably at least 1,000 and no greater than 2,000, and most preferably at least 1,500 and no greater than 2,000. If the weight average molecular weight Mw is smaller than 400, the amount of heat generated after mixing of the curing catalyst with the phenolic resin increases due to a large amount of addition reaction sites remaining in phenol nuclei, and thus the phenolic resin plasticized by the compound α reaches a high temperature and the viscosity thereof decreases. As a result, cell rupture is induced during foaming and the closed cell ratio falls, resulting in higher thermal conductivity. Furthermore, cells have a higher tendency to coalesce due to the viscosity of the phenolic resin being reduced, and thus poor quality foam having a large average cell diameter is formed. If the weight average molecular weight Mw is greater than 3,000, the viscosity of the phenolic resin becomes too high and the amount of low molecular weight components in the phenolic resin is small. In such a situation, the amount of heat that is generated by the phenolic resin is reduced, which necessitates use of a large amount of the volatile compound to obtain the required expansion ratio and may lead to the phenolic resin foam having poorer surface smoothness.

The weight average molecular weight Mw can be adjusted, for example, through the types and proportions of the phenyl group-containing compound and the aldehyde group-containing compound or derivative thereof, the polymerization temperature and time, and so forth.

The viscosity of the phenolic resin at 40°C is not specifically limited, but is, for example, preferably at least 1,000 mPa·s and no greater than 100,000 mPa·s, and from a viewpoint of improving the closed cell ratio and reducing the average cell diameter, is more preferably at least 5,000 mPa·s and no greater than 50,000 mPa·s, and even more preferably at least 7,000 mPa·s and no greater than 30,000 mPa·s. If the viscosity of the phenolic resin at 40°C is too low (for example, lower than 1,000 mPa·s), cells in the phenolic resin foam tend to coalesce, resulting in excessively large cell diameter. Moreover, this tends to lead to a poor closed cell ratio and lower thermal insulation performance after long-term storage as a result of cell walls rupturing more easily due to foaming pressure. An excessively high phenolic resin viscosity at 40°C (for example, higher than 100,000 mPa·s) is unfavorable because it may not be possible to achieve the required expansion ratio due to slowing of the foaming rate.

Note that the viscosity at 40°C is a value measured by a method described in "(9) Viscosity of phenolic resin at 40°C" of the subsequent "Evaluation" section. The viscosity at 40°C can be adjusted, for example, through the weight average molecular weight of the phenolic resin, the moisture percentage of the phenolic resin, and so forth.

The content of the volatile compound (i.e., the total content of the compound α or the total content of the compound α and the hydrocarbon) in the foamable phenolic resin composition is not specifically limited, but relative to the total amount (100 mass%) of the phenolic resin and the surfactant is, for example, preferably at least 3.0 mass% and no greater than 25.0 mass%, more preferably at least 4.0 mass% and no greater than 20.0 mass%, even more preferably at least 5.0 mass% and no greater than 17.5 mass%, and particularly preferably at least 6.0 mass% and no greater than 15.0 mass%. A content of less than 3.0 mass% is unfavorable because it becomes very difficult to obtain the required expansion ratio and the density of the foam becomes excessively high, as a result of which, it is not possible to obtain good quality foam. A content of greater than 25.0 mass% is unfavorable because the viscosity of the phenolic resin is reduced due to the plasticizing effect of the compound α and because too high a content causes excessive foaming and rupturing of cells in the foam, as a result of which, the closed cell ratio is reduced and long-term thermal insulation performance and the like are also reduced.

The foamable phenolic resin composition may contain an inorganic gas such as nitrogen or argon as a cell nucleating agent in order to suppress a decrease in the closed cell ratio and an increase in cell diameter associated with plasticization of the phenolic resin. The content of the cell nucleating agent relative to the total amount (100 mass%) of the compound α and the hydrocarbon is preferably at least 0.05 mass% and no greater than 5.0 mass%, more preferably at least 0.05 mass% and no greater than 3.0 mass%, even more preferably at least 0.1 mass% and no greater than 2.5 mass%, particularly preferably at least 0.1 mass% and no greater than 1.5 mass%, and most preferably at least 0.3 mass% and no greater than 1.0 mass%. A content of less than 0.05 mass% is unfavorable because the action as a cell nucleating agent is inadequate, whereas a content of greater than 5.0 mass% is unfavorable because it causes an excessively high foaming pressure in the foaming and curing process of the phenolic resin foam, leading to rupturing of cells in the foam and formation of poor quality foam having a low closed cell ratio and a large cell diameter.

Examples of the surfactant include surfactants that are commonly used in production of phenolic resin foam. Of such surfactants, non-ionic surfactants are effective and preferable examples include a polyalkylene oxide that is a copolymer of ethylene oxide and propylene oxide, a condensate of an alkylene oxide and castor oil, a condensate of an alkylene oxide and an alkylphenol such as nonylphenol or dodecylphenol, a polyoxyethylene alkyl ether in which the alkyl ether part has a carbon number of 14 to 22, a fatty acid ester such as a polyoxyethylene fatty acid ester, a silicone-based compound such as polydimethylsiloxane, and a polyalcohol. These surfactants may be used individually or as a combination of two or more types.

Although the amount of the surfactant that is used is not specifically limited, the amount relative to 100 parts by mass of the phenolic resin is preferably at least 0.3 parts by mass and no greater than 10 parts by mass.

The curing catalyst may be any acidic curing catalyst that enables curing of the phenolic resin and is, for example, preferably an anhydrous acid curing catalyst. The anhydrous acid curing catalyst is preferably anhydrous phosphoric acid or an anhydrous arylsulfonic acid. Examples of the anhydrous arylsulfonic acid include toluenesulfonic acid, xylenesulfonic acid, phenolsulfonic acid, substituted phenolsulfonic acid, xylenolsulfonic acid, substituted xylenolsulfonic acid, dodecylbenzenesulfonic acid, benzenesulfonic acid, and naphthalenesulfonic acid. One curing catalyst may be used individually, or two or more curing catalysts may be used in combination. The curing catalyst may be diluted with a solvent such as ethylene glycol or diethylene glycol.

Although the amount of the curing catalyst that is used is not specifically limited, the amount relative to the total amount (100 parts by mass) of the phenolic resin and the surfactant is preferably at least 3 parts by mass and no greater than 30 parts by mass.

Examples of the curing aid include resorcinol, cresol, saligenin (o-methylolphenol), and p-methylolphenol. One curing aid may be used individually, or two or more curing aids may be used in combination.

The inorganic compound may be any of the previously described examples.

Although the content of the inorganic compound in the foamable phenolic resin composition is not specifically limited, the content relative to the total amount (100 parts by mass) of the phenolic resin is, for example, preferably at least 0.1 parts by mass and no greater than 35 parts by mass, more preferably at least 1 part by mass and no greater than 20 parts by mass, and even more preferably at least 2 parts by mass and no greater than 15 parts by mass. If the content is greater than 35 parts by mass, the negative effect on initial thermal conductivity of the foam due to high thermal conductivity of the inorganic compound itself tends to be more significant than the effect on reducing the cell diameter obtained after foaming.

Examples of the plasticizer include phthalic acid esters and glycols such as ethylene glycol and diethylene glycol. Of these examples, phthalic acid esters are preferable. One plasticizer may be used individually, or two or more plasticizers may be used in combination.

Although the content of the plasticizer is not specifically limited, the content per 100 parts by mass of the phenolic resin is, for example, preferably at least 0.5 parts by mass and no greater than 20 parts by mass, and more preferably at least 1.0 parts by mass and no greater than 10 parts by mass. Addition of too much plasticizer (for example, addition of more than 20 parts by mass) significantly reduces the viscosity of the phenolic resin and induces cell rupturing during foaming and curing, whereas addition of too little plasticizer (for example, addition of less than 0.5 parts by mass) does not enable the effects of the plasticizer to be displayed.

A nitrogen-containing compound may be added to the foamable phenolic resin composition to act as a formaldehyde catcher for reducing formaldehyde emission from the phenolic resin foam and/or for an objective of providing the phenolic resin foam with flexibility.

The nitrogen-containing compound may, for example, be a compound selected from the group consisting of urea, melamine, nuclidine, pyridine, hexamethylenetetramine, and mixtures thereof. Urea is preferable as the nitrogen-containing compound. One nitrogen-containing compound may be used individually, or two or more nitrogen-containing compounds may be used in combination.

The nitrogen-containing compound may, as is commonly known, be directly added partway through reaction of the phenolic resin or near to the end point of this reaction, or may be reacted with an aldehyde group-containing compound or derivative thereof in advance before being mixed with the phenolic resin.

Although the content of the nitrogen-containing compound is not specifically limited, the content per 100 mass% of the phenolic resin is, for example, preferably at least 1 mass% and no greater than 10 mass%.

The foamable phenolic resin composition can be obtained, for example, by mixing the phenolic resin, the surfactant, the curing catalyst, the compound α, and so forth in proportions such as set forth above, but is not specifically limited to being obtained in this manner.

The phenolic resin foam can be obtained through foaming and curing (heat curing) of the foamable phenolic resin composition. For example, the phenolic resin foam may be obtained through a continuous production process in which the foamable phenolic resin composition is continuously discharged onto a moving surface material (lower surface material), is covered with another surface material (upper surface material) at an opposite surface of the phenolic resin composition to a surface that is in contact with the lower surface material (i.e., both surfaces of the foamed or unfoamed phenol resin composition are sandwiched between the surface materials), and is heat cured, or may be obtained by a batch production process in which a surface material is provided at an inner surface of a frame or a mold release agent is applied onto the inner surface of the frame, the foamable phenolic resin composition is poured into the frame, and then the foamable phenolic resin composition is foamed and heat cured. Of these processes, a continuous production process is preferable from a viewpoint of productivity and quality of the produced phenolic resin foam.

In the present specification, a laminate in which phenolic resin foam is stacked on a surface material (i.e., a laminate including a surface material and phenolic resin foam) may also be referred to as a phenolic resin foam laminate. The phenolic resin foam laminate may include one surface material or may include two surface materials (upper surface material and lower surface material).

It is preferable that the surface material(s) are flexible to prevent breaking of the surface material(s) during production. Examples of flexible surface materials that can be used include synthetic fiber nonwoven fabrics, synthetic fiber woven fabrics, glass fiber paper, glass fiber woven fabrics, glass fiber nonwoven fabrics, glass fiber mixed paper, paper, metal films, and combinations thereof. The surface material(s) may contain a flame retardant to impart flame retardance. Examples of the flame retardant include bromine compounds such as tetrabromobisphenol A and decabromodiphenyl ether, aromatic phosphoric acid esters, aromatic condensed phosphoric acid esters, halogenated phosphoric acid esters, phosphorus and phosphorus compounds such as red phosphorus, ammonium polyphosphate, antimony compounds such as antimony trioxide and antimony pentoxide, metal hydroxides such as aluminum hydroxide and magnesium hydroxide, and carbonates such as calcium carbonate and sodium carbonate. The flame retardant may be kneaded into fibers of the surface material(s), or may be added in an acrylic, polyvinyl alcohol, vinyl acetate, epoxy, unsaturated polyester, or other surface material binder. Moreover, the surface material(s) may be surface treated with a water repellant based on a fluororesin, a silicone resin, a wax emulsion, paraffin, a combination of an acrylic resin and paraffin wax, or the like or an asphalt-based waterproofing agent. These water repellants and water proofing agents may be used individually, and may be applied onto the surface material(s) after addition of the flame retardant thereto.

The surface material(s) preferably have high gas permeability. Examples of surface materials having high gas permeability include synthetic fiber nonwoven fabrics, glass fiber paper, glass fiber nonwoven fabrics, paper, and metal films in which holes have been opened in advance (for example, a reinforced laminate of a metal foil having through holes pasted together with paper, glass cloth, or glass fiber). Of such surface materials, a surface material that is gas permeable to the extent of having an oxygen transmission rate of at least 4.5 $cm^3/24\ h \cdot m^2$ as measured in accordance with ASTM D3985-95 is particularly preferable. If a surface material having low gas permeability is used, moisture produced during curing of the phenolic resin cannot be released from the foam and remains in the foam. Consequently, foam having a low closed cell ratio and a large number of voids is formed, and good thermal insulation performance cannot be maintained over the long-term. In a situation in which a synthetic fiber nonwoven fabric is used for a surface material, the weight per unit area of the synthetic fiber nonwoven fabric is, for example, preferably at least 15 $g/m^2$ and no greater than 200 $g/m^2$, more preferably at least 15 $g/m^2$ and no greater than 150 $g/m^2$, even more preferably at least 15 $g/m^2$ and no greater than 100 $g/m^2$, particularly preferably at least 15 $g/m^2$ and no greater than 80 $g/m^2$, and most preferably at least 15 $g/m^2$ and no greater than 60 $g/m^2$. This is from a viewpoint of seepage of the foamable phenolic resin composition into the surface material during foaming and from a viewpoint of adhesion between the foamable phenolic resin composition and the surface material. In a situation in which a glass fiber nonwoven fabric is used for a surface material, the weight per unit area of the glass fiber nonwoven fabric is, for example, preferably at least 30 $g/m^2$ and no greater than 600 $g/m^2$, more preferably at least 30 $g/m^2$ and no greater than 500 $g/m^2$, even more preferably at least 30 $g/m^2$ and no greater than 400 $g/m^2$, particularly preferably at least 30 $g/m^2$ and no greater than 350 $g/m^2$, and most preferably at least 30 $g/m^2$ and no greater than 300 $g/m^2$.

The foamable phenolic resin composition is preferably foamed, for example, through discharge onto a surface material at a temperature that is higher than the boiling point average value of the compound $\alpha$ (boiling point average value of mixture $\beta$ in a situation in which a hydrocarbon is included). The foamed phenolic resin composition (pre-curing phenolic resin foam) can be cured, for example, using an apparatus including a first oven and a second oven (for example, an endless steel belt-type double conveyor or a slat-type double conveyor).

In discharge of the foamable phenolic resin composition onto a surface material (for example, onto a lower surface material), the temperature of the foamable phenolic resin composition (discharge temperature; Y; units: °C) is not specifically limited, but is, for example, preferably at least coefficient b calculated by the following formula (3) and no higher than coefficient a calculated by the following formula (2) (i.e., b ≤ Y ≤ a), more preferably at least coefficient b' calculated by the following formula (5) and no higher than coefficient a' calculated by the following formula (4) (i.e., b' ≤ Y ≤ a'), and even more preferably at least coefficient b" calculated by the following formula (7) and no higher than coefficient a" calculated by the following formula (6) (i.e., b" ≤ Y ≤ a").

A discharge temperature Y that is higher than the coefficient a is unfavorable because sudden foaming occurs, causing cell rupturing. A discharge temperature Y that is lower than the coefficient b is unfavorable because the foaming rate is slow, as a result of which, cells coalesce more easily and the cell diameter tends to increase.

$$a = 0.00005X^3 + 0.003X^2 + 0.08X + 52 \qquad (2)$$

$$b = 0.0002X^3 + 0.006X^2 + 0.07X + 17 \qquad (3)$$

$$a' = 0.00006X^3 + 0.003X^2 + 0.08X + 47 \qquad (4)$$

$$b' = 0.0002X^3 + 0.004X^2 + 0.05X + 22 \qquad (5)$$

$$a'' = 0.00007X^3 + 0.003X^2 + 0.08X + 42 \qquad (6)$$

$$b'' = 0.0002X^3 + 0.003X^2 + 0.02X + 26 \qquad (7)$$

(In formulae (2) to (7), X represents the boiling point average value (°C) of the volatile compound.)

Note that the discharge temperature is a value measured by a method described in "(10) Discharge temperature" of the subsequent "Evaluation" section. The discharge temperature can be adjusted, for example, through mixer temperature control, the proportion of the volatile compound, the proportion of the curing catalyst, the composition and proportion of the phenolic resin, the reaction rate, the viscosity of the phenolic resin, and so forth.

The first oven preferably generates hot air having a temperature of at least 60°C and no higher than 110°C. The foamed phenolic resin composition (pre-curing phenolic resin foam) may be cured in the first oven while being formed into a board shape to obtain partially cured phenolic resin foam. The inside of the first oven may have a uniform temperature throughout or may include a plurality of temperature zones.

The second oven preferably generates hot air having a temperature of at least 70°C and no higher than 120°C to post cure the foam that has been partially cured in the first oven. Partially cured phenolic resin foam boards may be stacked with a fixed interval in-between using a spacer or tray. If the temperature in the second oven is too high, this induces cell rupturing due to the pressure of the volatile compound in cells of the phenolic resin foam becoming excessively high. On the other hand, if the temperature in the second oven is too low, this may necessitate an excessively long time for the curing reaction to progress. Accordingly, a temperature of at least 80°C and no higher than 110°C is more preferable.

In the first and second ovens, the internal temperature of the phenolic resin foam is preferably at least 60°C and no higher than 105°C, more preferably at least 70°C and no higher than 100°C, even more preferably at least 75°C and no higher than 95°C, and most preferably at least 75°C and no higher than 90°C. The internal temperature of the phenolic resin foam can be measured, for example, through insertion of a thermocouple and a data recorder inside the oven.

When the compound $\alpha$ is used, there is a concern that an increase in viscosity associated with curing reaction of the phenolic resin in the foaming and curing process may be cancelled out due to plasticization of the phenolic resin through high miscibility of the compound $\alpha$ with the phenolic resin. As a result, it may not be possible to provide the phenolic resin foam with adequate hardness through oven heating in the same way as in a conventional technique. Therefore, it is preferable that the total residence time in the first and second ovens is long compared to a situation in which a conventional hydrocarbon is used. The total residence time in the first and second ovens is, for example, preferably at least 3 minutes and no greater than 60 minutes, more preferably at least 5 minutes and no greater than 45 minutes, particularly preferably at least 5 minutes and no greater than 30 minutes, and most preferably at least 7 minutes and no greater than 20 minutes. If the residence time in the ovens is too short, the phenolic resin foam exits the ovens in an uncured state, resulting in formation of poor quality phenolic resin foam having poor dimensional stability. An excessively long residence time in the ovens is unfavorable because drying of the phenolic resin foam may progress too far such that the water content of the phenolic resin foam becomes too low. As a consequence, the phenolic resin foam may take in a large amount of water vapor from the atmosphere after exiting the ovens, leading to board warping.

Note that the method of foaming and curing the foamable phenolic resin composition to obtain the phenolic resin foam according to the present embodiment is not limited to the method set forth above.

The disclosed phenolic resin foam can be used as an insulating material or the like for housing construction material applications, manufacturing applications, or industrial applications.

Through the production method according to the present embodiment set forth above, is it possible to provide a phenolic resin foam that has low environmental impact and excellent initial thermal insulation performance, can maintain low thermal conductivity over the long-term, and can reduce condensation inside walls associated with increased water vapor permeation.

EXAMPLES

The following provides a more specific description of the disclosed techniques based on examples and comparative examples. However, the disclosed techniques are not limited to the following examples.

(Evaluation)

Phenolic resins and phenolic resin foams in the examples and comparative examples were measured and evaluated with respect to the following criteria.

(1) Foam density

In accordance with JIS K 7222, a 20 cm square specimen was cut out from each phenolic resin foam laminate obtained in the examples and comparative examples, surface materials were removed from the specimen, and then the mass and apparent volume of the phenolic resin foam were measured. The determined mass and apparent volume were used to calculate the foam density (apparent density of foam).

(2) Average cell diameter

The average cell diameter was measured by the following method with reference to JIS K 6402.
Each of the phenolic resin foam laminates obtained in the examples and comparative examples was cut in parallel with front and rear surfaces thereof at substantially the center of the phenolic resin foam in the thickness direction. A micrograph of the cut surface was obtained at ×50 magnification using a scanning electron microscope, and then four straight lines of 9 cm in length (equivalent to 1,800 $\mu$m in the actual foam cross-section) were drawn on the micrograph and an average value of the number of cells crossed by each of these straight lines was calculated. A value obtained by dividing 1,800 $\mu$m by the average value of the number of cells that were crossed was taken to be the average cell diameter.

(3) Closed cell ratio

The closed cell ratio was measured by the following method with reference to ASTM D 2856-94(1998)A.
An approximately 25 mm cube specimen was cut out from a central portion, in terms of a thickness direction, of the phenolic resin foam in each of the phenolic resin foam laminates obtained in the examples and comparative examples. In a situation in which the phenolic resin foam laminate was thin and it was not possible to obtain a specimen having a uniform thickness of 25 mm, a specimen having a uniform thickness was obtained by slicing approximately 1 mm from each surface of the approximately 25 mm cube specimen that had been cut out. The length of each side of the specimen was measured using a Vernier caliper to determine the apparent volume ($VI$: $cm^3$), and the mass of the specimen ($W$: to four significant figures; g) was measured. Subsequently, the closed space volume ($V2$: $cm^3$) of the specimen was measured using an air pycnometer (Tokyo Science Co., Ltd., product name: MODEL1000) in accordance with Procedure A in ASTM D 2856.
The average cell diameter (t: cm) was measured by the previously described measurement method in "(2) Average cell diameter". The surface area ($A$: $cm^2$) of the specimen was determined from the side lengths of the specimen.
The open volume ($VA$: $cm^3$) of cut cells at the surface of the specimen was calculated from t and A according to a formula: $VA = (A \times t)/1.14$. The density of the solid phenolic resin was taken to be 1.3 $g/cm^3$ and the volume ($VS$: $cm^3$) of a solid portion constituting cell walls contained in the specimen was calculated according to a formula: $VS =$ specimen mass ($W$)/1.3.
The closed cell ratio was calculated by the following formula (8).

$$\text{Closed cell ratio (\%)} = [(V2 - VS)/(V1 - VA - VS)] \times 100 \quad (8)$$

This measurement was conducted six times for foam samples obtained under the same production conditions, and the average value was taken to be a representative value.

(4) Identification of type of volatile compound in phenolic resin foam

First, chlorinated hydrofluoroolefin, non-chlorinated hydrofluoroolefin, and halogenated hydrocarbon standard gases were used to determine retention times under the GC/MS measurement conditions shown below.
Surface materials were peeled from phenolic resin foam laminates obtained in the examples and comparative examples. A sample of approximately 10 g of each phenolic resin foam and a metal file were placed in a 10 L container (product name: Tedlar Bag), the container was tightly sealed, and 5 L of nitrogen was injected therein. The sample was scraped and finely ground with use of the file through the Tedlar Bag. Next, the sample was left for 10 minutes in a temperature controller adjusted to 81°C while still in the Tedlar Bag. A 100 µL sample of gas generated in the Tedlar Bag was collected and analyzed by GC/MS under the measurement conditions shown below to identify the volatile compound in the phenolic resin foam.

The GC/MS analysis results were used to confirm the presence or absence of a chlorinated hydrofluoroolefin, non-chlorinated hydrofluoroolefin, and/or halogenated hydrocarbon. Moreover, the pre-determined retention times and the obtained mass spectrum were used to identify the type of chlorinated hydrofluoroolefin, non-chlorinated hydrofluoroolefin, and/or halogenated hydrocarbon. The retention times and the mass spectrum were also used to determine the type of hydrocarbon. Separately, the detection sensitivities of the generated gas components were each measured through use of a standard gas, and the composition ratio was calculated from the detected region area and the detection sensitivity of each gas component obtained by GC/MS. The mass ratio of each identified gas component was calculated from the composition ratio and the molar mass of each gas component.

(GC/MS measurement conditions)

Gas chromatograph: Agilent 7890 produced by Agilent Technologies
Column: InertCap 5 produced by GL Sciences Inc. (inner diameter: 0.25 mm, thickness: 5 µm, length: 30 m)
Carrier gas: Helium
Flow rate: 1.1 mL/min
Injection port temperature: 150°C
Injection method: Split method (1:50)
Sample injection amount: 100 µL
Column temperature: Maintained at -60°C for 5 minutes, raised to 150°C at 50°C/min, and maintained at 150°C for 2.8 minutes
Mass spectrometer: Q1000GC produced by JEOL Ltd.
Ionization method: Electron ionization (70 eV)
Scan range: m/Z = 10 to 500
Voltage: -1300 V
Ion source temperature: 230°C
Interface temperature: 150°C

(5) Initial thermal conductivity

The thermal conductivity at 23°C was measured by the following method in accordance with JIS A 1412-2:1999.
A 600 mm square specimen was cut from each of the phenolic resin foam laminates obtained in the examples and comparative examples. The specimen was placed in an atmosphere having a temperature of 23 ±1°C and a humidity of 50 ±2%, and the change over time in mass of the specimen was measured at 24 hour intervals. Conditioning was carried out until the change in mass over 24 hours was no greater than 0.2 mass%. The conditioned specimen was introduced into a thermal conductivity measuring device set up in the same environment.
The thermal conductivity was measured by peeling off the surface materials in a manner such that the surface of the phenolic resin foam was not damaged and then using a measurement device with a single specimen-symmetric configuration (produced by Eko Instruments, product name: HC-074/600) under conditions of a 13°C low temperature plate and a 33°C high temperature plate.

(6) Thermal conductivity after 14 days in 110°C atmosphere

After the initial thermal conductivity of the specimen has been measured, the specimen was subjected to accelerated testing in accordance with C.4.2.2 of EN13166:2012 Annex C by being left for 14 days in a circulation oven adjusted to a temperature of 110°C. Thereafter, the specimen was conditioned at a temperature of 23 ±2°C and a relative humidity of 50 ±5%. Next, the thermal conductivity after 14 days in a 110°C atmosphere was measured by the measurement method previously described in "(5) Initial thermal conductivity".
In addition, thermal conductivity difference was calculated according to the following formula.

$$\text{Thermal conductivity difference (W/m·K)} = \text{Thermal conductivity after 14 days in 110°C atmosphere (W/m·K)} - \text{Initial thermal conductivity (W/m·K)}$$

(7) Water vapor permeance

A specimen was obtained by cutting a 30 cm square of product thickness from each of the phenolic resin foam laminates obtained in the examples and comparative examples, and then removing the surface materials therefrom. The amount of water vapor permeation was measured and the water vapor permeance was calculated in accordance with the cup method described in JIS A 1324:1995 with the exception that in a situation in which the thickness of the specimen was greater than 50 mm, the cup height was set higher than the specimen to ensure that water vapor did not permeate from the side surface of the specimen.

(8) Weight average molecular weight Mw of phenolic resin

The weight average molecular weight Mw of each of the phenolic resins used in the examples and comparative examples was determined through gel permeation chromatography (GPC) under the following measurement conditions and through use of a calibration curve obtained using the standard substances shown below (standard polystyrene, 2-hydroxybenzyl alcohol, and phenol).

Pre-treatment:

A measurement solution was prepared by dissolving approximately 10 mg of the phenolic resin in 1 mL of N,N-dimethylformamide (produced by Wako Pure Chemical Industries, Ltd., high performance liquid chromatograph use), and then filtering the resultant solution through a 0.2 $\mu$m membrane filter.

Measurement conditions:

Measurement device: Shodex System 21 (produced by Showa Denko K.K.)
Column: Shodex Asahipak GF-310HQ (7.5 mm I.D. $\times$ 30 cm)
Eluent: Solution of 0.1 mass% of lithium bromide in N,N-dimethylformamide (produced by Wako Pure Chemical Industries, Ltd., high performance liquid chromatograph use)
Flow rate: 0.6 mL/min
Detector: RI detector
Column temperature: 40°C
Standard substances: Standard polystyrene (Shodex standard SL-105 produced by Showa Denko K.K.), 2-hydroxybenzyl alcohol (produced by Sigma-Aldrich Co. LLC., 99% grade), and phenol (produced by Kanto Kagaku, special grade)

(9) Viscosity of phenolic resin at 40°C

Phenolic resin was measured out in an amount of 0.5 mL and was set in a rotational viscometer (R-100 produced by Toki Sangyo Co., Ltd., rotor: 3° $\times$ R-14). The rotational speed of the rotor was set such that the viscosity of the phenolic resin being measured was within a range of 50% to 80% of the viscosity upper measurement limit of the viscometer. The measurement temperature was set as 40°C. A value of the viscosity 3 minutes after starting measurement was taken to be the measured value.

(10) Discharge temperature

A thermocouple was used to measure the temperature in a central region of a foamable phenolic resin composition straight after the foamable phenolic resin composition was discharged onto a surface material (for example, a lower surface material).

(Example 1)

A reactor was charged with 3500 kg of a 52 mass% formaldehyde aqueous solution and 2510 kg of 99 mass% phenol, and was stirred using a rotating propeller stirrer. The liquid temperature inside the reactor was adjusted to 40°C using a temperature controller. Next, a 50 mass% sodium hydroxide aqueous solution was added until the pH of the reaction liquid was adjusted to 8.7. The temperature of the reaction liquid was raised to 85°C over 1 hour. Thereafter, at a stage at which the Ostwald viscosity of the reaction liquid reached 200 centistokes (= 200 $\times$ 10$^{-6}$ m$^2$/s, measured value at 25°C, end point viscosity), the reaction liquid was cooled and 400 kg of urea was added thereto. Thereafter, the reaction liquid was cooled to 30°C and a 50 mass% aqueous solution of p-toluenesulfonic acid monohydrate was added until the pH of the reaction liquid was adjusted to 6.4. The resultant reaction liquid was subjected to concentrating treatment using a thin film evaporator until the moisture percentage of the phenolic resin reached 8.3 mass%. This concentrating treatment resulted in a viscosity of 20,000 mPa·s.

A mixture comprising 50 mass% of an ethylene oxide-propylene oxide block copolymer and 50 mass% of polyoxyethylene dodecylphenyl ether was mixed as a surfactant with the phenolic resin in a ratio of 2.0 parts by mass per 100 parts by mass of the phenolic resin. Next, 11 parts by mass of 1-chloro-3,3,3-trifluoropropene as a volatile compound and 14 parts by mass of a mixture comprising 80 mass% of xylenesulfonic acid as a curing catalyst and 20 mass% of diethylene glycol were added per 100 parts by mass of the phenolic resin mixed with the surfactant, and were mixed therewith using a mixing head adjusted to 15°C to yield a foamable phenolic resin composition. The obtained foamable phenolic resin composition was supplied onto a moving surface material with a discharge temperature of 30°C.

The foamable phenolic resin composition supplied onto the surface material was covered with another surface material at the opposite surface thereof to a surface in contact with the former of these surface materials and was simultaneously introduced into a slat-type double conveyor heated to 80°C in a sandwiched state between the two surface materials. The foamable phenolic resin composition was cured for a residence time of 15 minutes and was then further cured for 2 hours in a 110°C oven to obtain a phenolic resin foam laminate.

(Example 2)

A phenolic resin foam laminate was obtained in the same way as in Example 1 with the exception that 8 parts by mass of 1,3,3,3-tetrafluoro-1-propene was added as the volatile compound per 100 parts by mass of the phenolic resin mixed with the surfactant, mixing was performed using a mixing head adjusted to 10°C, and the discharge temperature was 22°C.

(Example 3)

A phenolic resin foam laminate was obtained in the same way as in Example 1 with the exception that 8 parts by mass of 2,3,3,3-tetrafluoro-1-propene was added as the volatile compound per 100 parts by mass of the phenolic resin mixed with the surfactant, mixing was performed using a mixing head adjusted to 7°C, and the discharge temperature was 17°C.

(Example 4)

A phenolic resin foam laminate was obtained in the same way as in Example 1 with the exception that 14 parts by mass of 1,1,1,4,4,4-hexafluoro-2-butene was added as the volatile compound per 100 parts by mass of the phenolic resin mixed with the surfactant, mixing was performed using a mixing head adjusted to 20°C, and the discharge temperature was 39°C.

(Example 5)

A phenolic resin foam laminate was obtained in the same way as in Example 1 with the exception that 7 parts by mass of isopropyl chloride was added as the volatile compound per 100 parts by mass of the phenolic resin mixed with the surfactant, mixing was performed using a mixing head adjusted to 27°C, and the discharge temperature was 48°C.

(Example 6)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, 10 parts by mass of a mixture of 1-chloro-3,3,3-trifluoropropene (90 mass%) and cyclopentane (10 mass%) was added as the volatile compound per 100 parts by mass of the phenolic resin mixed with the surfactant, mixing was performed using a mixing head adjusted to 18°C, and the discharge temperature was 34°C.

(Example 7)

A phenolic resin foam laminate was obtained in the same way as in Example 1 with the exception that the Ostwald viscosity of the phenolic resin was 40 centistokes, 7 parts by mass of a mixture of 1-chloro-3,3,3-trifluoropropene (50 mass%) and cyclopentane (50 mass%) was added as the volatile compound per 100 parts by mass of the phenolic resin mixed with the surfactant, mixing was performed using a mixing head adjusted to 25°C, and the discharge temperature was 45°C.

(Example 8)

A phenolic resin foam laminate was obtained in the same way as in Example 1 with the exception that the viscosity of the phenolic resin after concentrating treatment using the thin film evaporator was 10,000 mPa·s, 9 parts by mass of a mixture of 1-chloro-3,3,3-trifluoropropene (90 mass%) and isopentane (10 mass%) was added as the volatile compound per 100 parts by mass of the phenolic resin mixed with the surfactant, mixing was performed using a mixing head adjusted to 25°C, and the discharge temperature was 43°C.

(Example 9)

A phenolic resin foam laminate was obtained in the same way as in Example 1 with the exception that the viscosity of the phenolic resin after concentrating treatment using the thin film evaporator was 5,000 mPa·s, 9 parts by mass of a mixture of 1-chloro-3,3,3-trifluoropropene (90 mass%) and isopropyl chloride (10 mass%) was added as the volatile compound per 100 parts by mass of the phenolic resin mixed with the surfactant, mixing was performed using a mixing head adjusted to 15°C, and the discharge temperature was 28°C.

(Example 10)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, 7 parts by mass of a mixture of 1,3,3,3-tetrafluoro-1-propene (50 mass%) and isopropyl chloride (50 mass%) was added as the volatile compound per 100 parts by mass of the phenolic resin mixed with the surfactant, mixing was performed using a mixing head adjusted to 12°C, and the discharge temperature was 25°C.

(Example 11)

A phenolic resin foam laminate was obtained in the same way as in Example 1 with the exception that the viscosity of the phenolic resin after concentrating treatment using the thin film evaporator was 5,000 mPa·s, 9 parts by mass of a mixture of 1-chloro-3,3,3-trifluoropropene (80 mass%), isopropyl chloride (10 mass%), and isopentane (10 mass%) was added as the volatile compound per 100 parts by mass of the phenolic resin mixed with the surfactant, mixing was performed using a mixing head adjusted to 12°C, and the discharge temperature was 25°C.

(Example 12)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, 7 parts by mass of a mixture of 1,3,3,3-tetrafluoro-1-propene (50 mass%), isopropyl chloride (40 mass%), and isopentane (10 mass%) was added as the volatile compound per 100 parts by mass of the phenolic resin mixed with the surfactant, mixing was performed using a mixing head adjusted to 9°C, and the discharge temperature was 20°C.

(Example 13)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 45,000 mPa·s, 7 parts by mass of a mixture of 1,3,3,3-tetrafluoro-1-propene (50 mass%) and cyclopentane (50 mass%) was added as the volatile compound per 100 parts by mass of the phenolic resin mixed with the surfactant, mixing was performed using a mixing head adjusted to 12°C, and the discharge temperature was 29°C.

(Example 14)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 80,000 mPa·s, 8 parts by mass of a mixture of 1,3,3,3-tetrafluoro-1-propene (90 mass%) and cyclopentane (10 mass%) was added as the volatile compound per 100 parts by mass of the phenolic resin mixed with the surfactant, mixing was performed using a mixing head adjusted to 7°C, and the discharge temperature was 19°C.

(Example 15)

A phenolic resin foam laminate was obtained in the same way as in Example 1 with the exception that the Ostwald viscosity of the phenolic resin was 370 centistokes, the viscosity of the phenolic resin after concentrating treatment using the thin film evaporator was 30,000 mPa·s, 8 parts by mass of a mixture of 1,3,3,3-tetrafluoro-1-propene (80 mass%) and cyclopentane (20 mass%) was added as the volatile compound per 100 parts by mass of the phenolic resin mixed with the surfactant, mixing was performed using a mixing head adjusted to 12°C, and the discharge temperature was 27°C.

(Example 16)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, 7 parts by mass of a mixture of 1-chloro-3,3,3-trifluoropropene (25 mass%) and cyclopentane (75 mass%) was added as the volatile compound per 100 parts by mass of the phenolic resin mixed with the surfactant, mixing was performed using a mixing head adjusted to 30°C, and the discharge temperature was 52°C.

(Example 17)

A phenolic resin foam laminate was obtained in the same way as in Example 1 with the exception that 8 parts by mass of 2,3,3,3-tetrafluoro-1-propene was added as the volatile compound per 100 parts by mass of the phenolic resin mixed with the surfactant, mixing was performed using a mixing head adjusted to 25°C, and the discharge temperature was 45°C.

(Example 18)

A phenolic resin foam laminate was obtained in the same way as in Example 1 with the exception that the Ostwald viscosity of the phenolic resin was 80 centistokes, 5 parts by mass of aluminum hydroxide having a volume average particle diameter of 20 $\mu$m was added per 100 parts by mass of the phenolic resin, 10 parts by mass of a mixture of 1-chloro-3,3,3-trifluoropropene (90 mass%) and cyclopentane (10 mass%) was added as the volatile compound per 100 parts by mass of the phenolic resin mixed with the surfactant, mixing was performed using a mixing head adjusted to 27°C, and the discharge temperature was 50°C.

(Example 19)

A phenolic resin foam laminate was obtained in the same way as in Example 1 with the exception that 8 parts by mass of a mixture of 1,3,3,3-tetrafluoro-1-propene (70 mass%) and cyclopentane (30 mass%) was added as the volatile compound per 100 parts by mass of the phenolic resin mixed with the surfactant, mixing was performed using a mixing head adjusted to 23°C, and the discharge temperature was 41°C.

(Example 20)

A phenolic resin foam laminate was obtained in the same way as in Example 1 with the exception that the viscosity of the phenolic resin after concentrating treatment using the thin film evaporator was 30,000 mPa·s, 8 parts by mass of a mixture of 2,3,3,3-tetrafluoro-1-propene (80 mass%) and cyclopentane (20 mass%) was added as the volatile compound per 100 parts by mass of the phenolic resin mixed with the surfactant, mixing was performed using a mixing head adjusted to 20°C, and the discharge temperature was 40°C.

(Example 21)

A phenolic resin foam laminate was obtained in the same way as in Example 1 with the exception that 2 parts by mass of hexamethyldisiloxane was added per 100 parts by mass of the phenolic resin mixed with the surfactant.

(Example 22)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, 2 parts by mass of hexamethyldisiloxane was added per 100 parts by mass of the phenolic resin mixed with the surfactant, 10 parts by mass of a mixture of 1-chloro-3,3,3-trifluoropropene (90 mass%) and cyclopentane (10 mass%) was added as the volatile compound per 100 parts by mass of the phenolic resin mixed with the surfactant, mixing was performed using a mixing head adjusted to 18°C, and the discharge temperature was 34°C.

(Example 23)

A phenolic resin foam laminate was obtained in the same way as in Example 1 with the exception that the viscosity of the phenolic resin after concentrating treatment using the thin film evaporator was 10,000 mPa·s, 2 parts by mass of hexamethyldisiloxane was added per 100 parts by mass of the phenolic resin mixed with the surfactant, 9 parts by mass of a mixture of 1-chloro-3,3,3-trifluoropropene (90 mass%) and isopentane (10 mass%) was added as the volatile compound per 100 parts by mass of the phenolic resin mixed with the surfactant, mixing was performed using a mixing head adjusted to 25°C, and the discharge temperature was 43°C.

(Example 24)

A phenolic resin foam laminate was obtained in the same way as in Example 9 with the exception that 8 parts by mass of a mixture of 1-chloro-3,3,3-trifluoropropene (20 mass%) and isopropyl chloride (80 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 23°C, and the discharge temperature was 41°C.

(Example 25)

A phenolic resin foam laminate was obtained in the same way as in Example 9 with the exception that 8 parts by mass of a mixture of 2-chloro-3,3,3-trifluoropropene (15 mass%) and isopropyl chloride (85 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 25°C, and the discharge temperature was 43°C.

(Example 26)

A phenolic resin foam laminate was obtained in the same way as in Example 24 with the exception that the Ostwald viscosity of the phenolic resin was 40 centistokes and the viscosity of the phenolic resin after concentrating treatment using the thin film evaporator was 3,000 mPa·s.

(Example 27)

A phenolic resin foam laminate was obtained in the same way as in Example 8 with the exception that 7 parts by mass of a mixture of 1-chloro-3,3,3-trifluoropropene (20 mass%) and isopentane (80 mass%) was added as the volatile compound per 100 parts by mass of the phenolic resin mixed with the surfactant, mixing was performed using a mixing head adjusted to 27°C, and the discharge temperature was 45°C.

(Example 28)

A phenolic resin foam laminate was obtained in the same way as in Example 9 with the exception that 9 parts by mass of a mixture of 1-chloro-3,3,3-trifluoropropene (50 mass%) and isopropyl chloride (50 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 20°C, and the discharge temperature was 38°C.

(Example 29)

A phenolic resin foam laminate was obtained in the same way as in Example 1 with the exception that 10 parts by mass of a mixture of 1-chloro-3,3,3-trifluoropropene (80 mass%) and 1,3,3,3-tetrafluoro-1-propene (20 mass%) was added as the volatile compound per 100 parts by mass of the phenolic resin mixed with the surfactant, mixing was performed using a mixing head adjusted to 15°C, and the discharge temperature was 26°C.

(Example 30)

A phenolic resin foam laminate was obtained in the same way as in Example 1 with the exception that 8 parts by mass of a mixture of 1-chloro-3,3,3-trifluoropropene (10 mass%), isopropyl chloride (80 mass%), and cyclopentane (10 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 19°C, and the discharge temperature was 38°C.

(Example 31)

A phenolic resin foam laminate was obtained in the same way as in Example 1 with the exception that 7 parts by mass of a mixture of 1,3,3,3-tetrafluoro-1-propene (20 mass%) and cyclopentane (80 mass%) was added as the volatile compound per 100 parts by mass of the phenolic resin mixed with the surfactant, mixing was performed using a mixing head adjusted to 25°C, and the discharge temperature was 45°C.

(Example 32)

A phenolic resin foam laminate was obtained in the same way as in Example 1 with the exception that 7 parts by mass of a mixture of 1,3,3,3-tetrafluoro-1-propene (20 mass%) and isopropyl chloride (80 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 15°C, and the discharge temperature was 30°C.

(Example 33)

A phenolic resin foam laminate was obtained in the same way as in Example 1 with the exception that 12 parts by mass of a mixture of 1,1,1,4,4,4-hexafluoro-2-butene (80 mass%) and cyclopentane (20 mass%) was added as the volatile compound per 100 parts by mass of the phenolic resin mixed with the surfactant, mixing was performed using a mixing head adjusted to 26°C, and the discharge temperature was 45°C.

(Example 34)

A phenolic resin foam laminate was obtained in the same way as in Example 1 with the exception that 12 parts by mass of a mixture of 1,1,1,4,4,4-hexafluoro-2-butene (80 mass%) and isopropyl chloride (20 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 23°C, and the discharge temperature was 39°C.

(Example 35)

A phenolic resin foam laminate was obtained in the same way as in Example 1 with the exception that 8 parts by mass of a mixture of 1,1,1,4,4,4-hexafluoro-2-butene (20 mass%) and isopropyl chloride (80 mass%) was added as the volatile compound per 100 parts by mass of the phenolic resin mixed with the surfactant, 1 part by mass of a phthalic acid ester was added as a plasticizer per 100 parts by mass of the phenolic resin, mixing was performed using a mixing head adjusted to 23°C, and the discharge temperature was 39°C.

(Example 36)

A phenolic resin foam laminate was obtained in the same way as in Example 1 with the exception that 13 parts by mass of a mixture of 1,1,1,4,4,4-hexafluoro-2-butene (80 mass%) and 1,3,3,3-tetrafluoro-1-propene (20 mass%) was added as the volatile compound per 100 parts by mass of the phenolic resin mixed with the surfactant, mixing was performed using a mixing head adjusted to 15°C, and the discharge temperature was 30°C.

(Comparative Example 1)

A phenolic resin foam laminate was obtained in the same way as in Example 1 with the exception that the Ostwald viscosity of the phenolic resin was 22 centistokes, the viscosity of the phenolic resin after concentrating treatment using the thin film evaporator was 10,000 mPa·s, mixing was performed using a mixing head adjusted to 25°C, and the discharge temperature was 43°C.

(Comparative Example 2)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 800 mPa·s, mixing was performed using a mixing head adjusted to 23°C, and the discharge temperature was 40°C.

(Comparative Example 3)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, mixing was performed using a mixing head adjusted to 6°C, and the discharge temperature was 16°C.

(Comparative Example 4)

A phenolic resin foam laminate was obtained in the same way as in Example 1 with the exception that the Ostwald viscosity of the phenolic resin was 80 centistokes, the viscosity of the phenolic resin after concentrating treatment using the thin film evaporator was 10,000 mPa·s, mixing was performed using a mixing head adjusted to 33°C, and the discharge temperature was 56°C.

Tables 1 and 2 show evaluation results for the phenolic resins used in the examples and comparative examples and evaluation results for the phenolic resin foams.

Table 1

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|---|---|---|---|---|---|---|
| Phenolic resin — End point viscosity [$10^{-6}$ m²/s] | 200 | 200 | 200 | 200 | 200 | 80 | 40 | 200 | 200 | 80 | 200 | 80 | 80 | 80 | 370 | 80 | 200 | 80 | 200 | 200 |
| Phenolic resin — Weight average molecular weight | 1900 | 1900 | 1900 | 1900 | 1900 | 950 | 540 | 1900 | 1900 | 950 | 1900 | 950 | 950 | 950 | 2600 | 950 | 1900 | 950 | 1900 | 1900 |
| Viscosity at 40°C [mPa·s] | 20000 | 20000 | 20000 | 20000 | 20000 | 10000 | 20000 | 10000 | 5000 | 10000 | 5000 | 10000 | 45000 | 80000 | 30000 | 10000 | 20000 | 20000 | 20000 | 30000 |
| First component | 1-Chloro-3,3,3-trifluoro propene | 1,3,3,3-Tetra fluoro-1-propene | 2,3,3,3-Tetra fluoro-1-propene | 1,1,1,4,4,4-Hexa fluoro-2-butene | Isopropyl chloride | 1-Chloro-3,3,3-trifluoro propene | 1-Chloro-3,3,3-trifluoro propene | 1-Chloro-3,3,3-trifluoro propene | 1-Chloro-3,3,3-trifluoro propene | 1,3,3,3-Tetra fluoro-1-propene | 1-Chloro-3,3,3-trifluoro propene | 1,3,3,3-Tetra fluoro-1-propene | 1,3,3,3-Tetra fluoro-1-propene | 1,3,3,3-Tetra fluoro-1-propene | 1,3,3,3-Tetra fluoro-1-propene | 1-Chloro-3,3,3-trifluoro propene | 2,3,3,3-Tetra fluoro-1-propene | 1-Chloro-3,3,3-trifluoro propene | 1,3,3,3-Tetra fluoro-1-propene | 2,3,3,3-Tetra fluoro-1-propene |
| Second component | - | - | - | - | - | Cyclo pentane | Cyclo pentane | Isopentane | Isopropyl chloride | Isopropyl chloride | Isopropyl chloride | Isopropyl chloride | Cyclo pentane | Cyclo pentane | Cyclo pentane | Cyclo pentane | - | Cyclo pentane | Cyclo pentane | Cyclo pentane |
| Third component | - | - | - | - | - | - | - | - | - | - | Isopentane | Isopentane | - | - | - | - | - | - | - | - |
| Volatile compound — Mass ratio of first, second, and third components | 100/0/0 | 100/0/0 | 100/0/0 | 100/0/0 | 100/0/0 | 90/10/0 | 50/50/0 | 90/10/0 | 90/10/0 | 50/50/0 | 80/10/10 | 50/40/10 | 50/50/0 | 90/10/0 | 80/20/0 | 25/75/0 | 100/0/0 | 90/10/0 | 70/30/0 | 80/20/0 |
| Boiling point average value [°C] | 19 | -19 | -29 | 33 | 35 | 24 | 39 | 21 | 21 | 13 | 23 | 12 | 23 | -9 | 1 | 44 | -29 | 24 | 9 | -6 |
| $0.00005X^3 + 0.003X^2 + 0.08X + 52$ [°C] | 54.9 | 51.2 | 51.0 | 59.7 | 60.6 | 56.3 | 62.6 | 55.5 | 55.5 | 53.7 | 56.0 | 53.5 | 56.0 | 51.5 | 52.1 | 65.6 | 51.0 | 56.3 | 53.0 | 51.6 |
| $0.0002X^3 + 0.006X^2 + 0.07X + 17$ [°C] | 21.9 | 16.5 | 15.1 | 33.0 | 35.4 | 24.9 | 40.7 | 23.0 | 23.0 | 19.4 | 24.2 | 19.0 | 24.2 | 16.7 | 17.1 | 48.7 | 15.1 | 24.9 | 18.3 | 16.8 |
| Discharge temperature [°C] | 30 | 22 | 17 | 39 | 48 | 34 | 45 | 43 | 28 | 25 | 25 | 20 | 29 | 19 | 27 | 52 | 45 | 50 | 41 | 40 |
| Use of inorganic compound | No | No | No | No | No | No | No | No | No | No | No | No | No | No | No | No | No | Yes | No | No |
| Type of identified volatile compound in phenolic resin foam | 1-Chloro-3,3,3-trifluoro propene | 1,3,3,3-Tetra fluoro-1-propene | 2,3,3,3-Tetra fluoro-1-propene | 1,1,1,4,4,4-Hexa fluoro-2-butene | Isopropyl chloride | 1-Chloro-3,3,3-trifluoro propene/ Cyclo pentane | 1-Chloro-3,3,3-trifluoro propene/ Cyclo pentane | 1-Chloro-3,3,3-trifluoro propene/ Isopentane | 1-Chloro-3,3,3-trifluoro propene/ Isopropyl chloride | 1,3,3,3-Tetra fluoro-1-propene/ Isopropyl chloride | 1-Chloro-3,3,3-trifluoro propene/ Isopropyl chloride/ Isopentane | 1,3,3,3-Tetra fluoro-1-propene/ Isopropyl chloride/ Isopentane | 1,3,3,3-Tetra fluoro-1-propene/ Cyclo pentane | 1,3,3,3-Tetra fluoro-1-propene/ Cyclo pentane | 1,3,3,3-Tetra fluoro-1-propene/ Cyclo pentane | 1-Chloro-3,3,3-trifluoro propene/ Cyclo pentane | 2,3,3,3-Tetra fluoro-1-propene | 1-Chloro-3,3,3-trifluoro propene/ Cyclo pentane | 1,3,3,3-Tetra fluoro-1-propene/ Cyclo pentane | 2,3,3,3-Tetra fluoro-1-propene/ Cyclo pentane |
| Density [kg/m³] | 28.8 | 36.5 | 42.3 | 27.3 | 33.1 | 28.0 | 26.5 | 30.2 | 33.8 | 34.5 | 33.8 | 34.2 | 33.3 | 38.1 | 34.9 | 29.0 | 27.2 | 29.1 | 36.0 | 40.5 |
| Average cell diameter [μm] | 91 | 110 | 121 | 96 | 106 | 95 | 85 | 90 | 115 | 133 | 109 | 127 | 77 | 93 | 101 | 79 | 177 | 91 | 95 | 110 |
| Closed cell ratio [%] | 96.0 | 92.2 | 90.8 | 96.3 | 93.4 | 95.8 | 94.9 | 96.0 | 92.1 | 92.8 | 93.0 | 93.5 | 93.9 | 93.3 | 92.9 | 94.5 | 85.3 | 96.0 | 93.1 | 91.1 |
| Initial thermal conductivity [W/mK] | 0.0169 | 0.0176 | 0.0178 | 0.0168 | 0.0180 | 0.0171 | 0.0173 | 0.0176 | 0.0175 | 0.0183 | 0.0179 | 0.0185 | 0.0172 | 0.0174 | 0.0174 | 0.0180 | 0.0188 | 0.0170 | 0.0172 | 0.0176 |
| Thermal conductivity after 14 days in 110°C atmosphere [W/mK] | 0.0179 | 0.0188 | 0.0193 | 0.0179 | 0.0189 | 0.0180 | 0.0180 | 0.0187 | 0.0190 | 0.0196 | 0.0192 | 0.0197 | 0.0182 | 0.0185 | 0.0185 | 0.0188 | 0.0207 | 0.0179 | 0.0184 | 0.0190 |
| Thermal conductivity difference | 0.0010 | 0.0012 | 0.0015 | 0.0011 | 0.0009 | 0.0009 | 0.0007 | 0.0011 | 0.0015 | 0.0013 | 0.0013 | 0.0012 | 0.0010 | 0.0011 | 0.0011 | 0.0008 | 0.0019 | 0.0009 | 0.0012 | 0.0014 |
| Water vapor permeance [ng/ms·Pa] | 1.09 | 0.79 | 0.57 | 1.27 | 0.89 | 1.15 | 1.21 | 1.01 | 1.04 | 0.99 | 1.00 | 0.97 | 0.75 | 0.72 | 0.79 | 1.08 | 1.45 | 1.05 | 0.71 | 0.59 |

Table 2

| | | Example 21 | Example 22 | Example 23 | Example 24 | Example 25 | Example 26 | Example 27 | Example 28 | Example 29 | Example 30 | Example 31 | Example 32 | Example 33 | Example 34 | Example 35 | Example 36 | Comparative Example 1 | Comparative Example 2 | Comparative Example 3 | Comparative Example 4 |
|---|---|---|---|---|---|---|---|---|---|---|---|---|---|---|---|---|---|---|---|---|---|
| Phenolic resin | End point viscosity $[10^{-6}\,m^2/s]$ | 200 | 80 | 200 | 200 | 200 | 40 | 200 | 200 | 200 | 200 | 200 | 200 | 200 | 200 | 200 | 200 | 22 | 80 | 80 | 80 |
| | Weight average molecular weight | 1900 | 950 | 1900 | 1900 | 1900 | 540 | 1900 | 1900 | 1900 | 1900 | 1900 | 1900 | 1900 | 1900 | 1900 | 1900 | 320 | 950 | 950 | 950 |
| | Viscosity at 40°C [mPa·s] | 20000 | 10000 | 10000 | 5000 | 5000 | 3000 | 10000 | 5000 | 20000 | 20000 | 20000 | 20000 | 20000 | 20000 | 20000 | 20000 | 10000 | 800 | 10000 | 10000 |
| Volatile compound | First component | 1-Chloro-3,3,3-trifluoro propene | 1-Chloro-3,3,3-trifluoro propene | 1-Chloro-3,3,3-trifluoro propene | 1-Chloro-3,3,3-trifluoro propene | 2-Chloro-3,3,3-trifluoro propene | 1-Chloro-3,3,3-trifluoro propene | 1-Chloro-3,3,3-trifluoro propene | 1-Chloro-3,3,3-trifluoro propene | 1-Chloro-3,3,3-trifluoro propene | 1-Chloro-3,3,3-trifluoro propene | 1,3,3,3-Tetrafluoro-1-propene | 1,3,3,3-Tetrafluoro-1-propene | 1,1,1,4,4,4-Hexafluoro-2-butene | 1,1,1,4,4,4-Hexafluoro-2-butene | 1,1,1,4,4,4-Hexafluoro-2-butene | 1,1,1,4,4,4-Hexafluoro-2-butene | 1-Chloro-3,3,3-trifluoro propene | 1-Chloro-3,3,3-trifluoro propene | 1-Chloro-3,3,3-trifluoro propene | 1-Chloro-3,3,3-trifluoro propene |
| | Second component | - | Cyclopentane | Isopentane | Isopropyl chloride | Isopropyl chloride | Isopropyl chloride | Isopentane | Isopropyl chloride | 1,3,3,3-Tetrafluoro-1-propene | Isopropyl chloride | Cyclopentane | Isopropyl chloride | Cyclopentane | Isopropyl chloride | Isopropyl chloride | 1,3,3,3-Tetrafluoro-1-propene | - | - | - | - |
| | Third component | - | - | - | - | - | - | - | - | - | Cyclopentane | - | - | - | - | - | - | - | - | - | - |
| | Mass ratio of first, second, and third components | 100/0/0 | 90/10/0 | 90/10/0 | 20/80/0 | 15/85/0 | 20/80/0 | 20/80/0 | 50/50/0 | 80/20/0 | 10/80/10 | 20/80/0 | 20/80/0 | 80/20/0 | 80/20/0 | 20/80/0 | 80/20/0 | 100/0/0 | 100/0/0 | 100/0/0 | 100/0/0 |
| | Boiling point average value [°C] | 19 | 24 | 21 | 33 | 33 | 33 | 27 | 29 | 11 | 36 | 40 | 27 | 39 | 34 | 35 | 19 | 19 | 19 | 19 | 19 |
| | $0.00005X^3 - 0.003X^2 + 0.08X + 52$ [°C] | 54.9 | 56.3 | 55.5 | 59.7 | 59.7 | 59.7 | 57.3 | 58.1 | 53.3 | 61.1 | 63.2 | 57.3 | 62.6 | 60.2 | 60.6 | 54.9 | 54.9 | 54.9 | 54.9 | 54.9 |
| | $0.0002X^3 + 0.006X^2 + 0.07X + 17$ [°C] | 21.9 | 24.9 | 23.0 | 33 | 33 | 33 | 27 | 29 | 19 | 37 | 42 | 27 | 41 | 34 | 35 | 22 | 21.9 | 21.9 | 21.9 | 21.9 |
| | Discharge temperature [°C] | 30 | 34 | 43 | 41 | 43 | 41 | 45 | 38 | 26 | 38 | 45 | 30 | 45 | 39 | 39 | 30 | 43 | 40 | 16 | 56 |
| Use of inorganic compound | | No | No | No | No | No | No | No | No | No | No | No | No | No | No | No | No | No | No | No | No |
| Type of identified volatile compound in phenolic resin foam | | 1-Chloro-3,3,3-trifluoro propene | 1-Chloro-3,3,3-trifluoro propene/Cyclopentane | 1-Chloro-3,3,3-trifluoro propene/Isopentane | 1-Chloro-3,3,3-trifluoro propene/Isopropyl chloride | 2-Chloro-3,3,3-trifluoro propene/Isopropyl chloride | 1-Chloro-3,3,3-trifluoro propene/Isopropyl chloride | 1-Chloro-3,3,3-trifluoro propene/Isopentane | 1-Chloro-3,3,3-trifluoro propene/Isopropyl chloride | 1-Chloro-3,3,3-trifluoro propene/1,3,3,3-Tetrafluoro-1-propene | 1-Chloro-3,3,3-trifluoro propene/Isopropyl chloride/Cyclopentane | 1,3,3,3-Tetrafluoro-1-propene/Cyclopentane | 1,3,3,3-Tetrafluoro-1-propene/Isopropyl chloride | 1,1,1,4,4,4-Hexafluoro-2-butene/Cyclopentane | 1,1,1,4,4,4-Hexafluoro-2-butene/Isopropyl chloride | 1,1,1,4,4,4-Hexafluoro-2-butene/Isopropyl chloride | 1,1,1,4,4,4-Hexafluoro-2-butene/1,3,3,3-Tetrafluoro-1-propene | 1-Chloro-3,3,3-trifluoro propene | 1-Chloro-3,3,3-trifluoro propene | 1-Chloro-3,3,3-trifluoro propene | 1-Chloro-3,3,3-trifluoro propene |
| Density [kg/m³] | | 28.3 | 27.1 | 29.8 | 31.7 | 30.9 | 27.5 | 31.5 | 31.1 | 30.3 | 32.3 | 33.3 | 32.4 | 26.5 | 28.8 | 32.1 | 30.1 | 26.1 | 27.1 | 29.3 | 26.2 |
| Average cell diameter [μm] | | 80 | 88 | 81 | 110 | 112 | 145 | 73 | 112 | 95 | 101 | 88 | 145 | 91 | 100 | 103 | 99 | 183 | 211 | 223 | 243 |
| Closed cell ratio [%] | | 98.1 | 97.8 | 98.3 | 93.0 | 92.8 | 90.9 | 97.8 | 92.6 | 95.1 | 94.3 | 93.7 | 93.0 | 96.9 | 95.5 | 93.8 | 95.2 | 78.1 | 79.8 | 76.6 | 72.6 |
| Initial thermal conductivity [W/m·K] | | 0.0167 | 0.0169 | 0.0173 | 0.0178 | 0.0179 | 0.0185 | 0.0199 | 0.0177 | 0.0171 | 0.0179 | 0.0173 | 0.0186 | 0.0173 | 0.0171 | 0.0178 | 0.0170 | 0.0191 | 0.0194 | 0.0199 | 0.0204 |
| Thermal conductivity after 14 days in 110°C atmosphere [W/m·K] | | 0.0175 | 0.0176 | 0.0182 | 0.0189 | 0.0190 | 0.0201 | 0.0208 | 0.0190 | 0.0182 | 0.0189 | 0.0183 | 0.0199 | 0.0183 | 0.0182 | 0.0187 | 0.0181 | 0.0215 | 0.0214 | 0.0222 | 0.0230 |
| Thermal conductivity difference | | 0.0008 | 0.0007 | 0.0009 | 0.0011 | 0.0011 | 0.0016 | 0.0009 | 0.0013 | 0.0011 | 0.0010 | 0.0010 | 0.0013 | 0.0010 | 0.0011 | 0.0009 | 0.0011 | 0.0024 | 0.0020 | 0.0023 | 0.0026 |
| Water vapor permeance [ng/m·s·Pa] | | 1.01 | 1.10 | 0.93 | 0.93 | 0.95 | 1.35 | 0.85 | 0.94 | 0.93 | 0.84 | 0.81 | 1.15 | 1.19 | 1.17 | 0.86 | 0.93 | 1.88 | 2.02 | 1.97 | 2.25 |

INDUSTRIAL APPLICABILITY

The phenolic resin foam according to the present embodiment has low environmental impact, can maintain excellent thermal insulation performance over the long-term, and suppresses condensation inside walls associated with increased water vapor permeation, and can, therefore, be suitably adopted as an insulating material or the like in housing applications.

**Claims**

1.  A phenolic resin foam comprising
    a phenolic resin and a volatile compound including at least one hydrocarbon and at least one selected from the group consisting of a chlorinated hydrofluoroolefin, a non-chlorinated hydrofluoroolefin, and a halogenated hydrocarbon, wherein
    the phenolic resin foam has a density of at least 22 kg/m$^3$ and no greater than 50 kg/m$^3$,
    the phenolic resin foam has an average cell diameter of at least 30 $\mu$m and no greater than 200 $\mu$m,
    the phenolic resin foam has a closed cell ratio of at least 80% and no greater than 99%,
    the phenolic resin foam has a water vapor permeance of at least 0.63 ng/(m·s·Pa) and no greater than 1.25 ng/(m·s·Pa), and
    a proportion of the hydrocarbon relative to the total amount of the volatile compound is at least 5 mass%.

2.  The phenolic resin foam according to claim 1, wherein
    the chlorinated hydrofluoroolefin is at least one selected from the group consisting of 1-chloro-3,3,3-trifluoropropene and 2-chloro-3,3,3-trifluoropropene, and the non-chlorinated hydrofluoroolefin is at least one selected from the group consisting of 1,3,3,3-tetrafluoro-1-propene, 2,3,3,3-tetrafluoro-1-propene, and 1,1,1,4,4,4-hexafluoro-2-butene.

3.  The phenolic resin foam according to claim 1 or 2, wherein
    the halogenated hydrocarbon is isopropyl chloride.

4.  The phenolic resin foam according to any one of claims 1 to 3,
    wherein the hydrocarbon is a hydrocarbon having a carbon number of no greater than 6.

5.  The phenolic resin foam according to any one of claims 1 to 4, having an initial thermal conductivity of less than 0.0200 W/m·K.

6.  The phenolic resin foam according to any one of claims 1 to 5, having a thermal conductivity after 14 days in a 110°C atmosphere of less than 0.0210 W/m.K.

7.  The phenolic resin foam according to any one of claims 1 to 6, further comprising
    an inorganic compound.

8.  A method of producing a phenolic resin foam according to claim 1, comprising
    foaming and curing, on a surface material, a foamable phenolic resin composition containing a phenolic resin, a surfactant, a curing catalyst, and a volatile compound including at least one hydrocarbon and at least one selected from the group consisting of a chlorinated hydrofluoroolefin, a non-chlorinated hydrofluoroolefin, and a halogenated hydrocarbon, wherein
    the phenolic resin has a weight average molecular weight Mw of at least 400 and no greater than 3,000 as determined by gel permeation chromatography,
    the phenolic resin has a viscosity at 40°C of at least 1,000 mPa·s and no greater than 100,000 mPa·s,
    the volatile compound has a boiling point average value of at least -30°C and no higher than 45°C, and
    a discharge temperature of the foamable phenolic resin composition and the boiling point average value of the volatile compound satisfy a relationship:

$$0.0002X^3 + 0.006X^2 + 0.07X + 17 \leq Y \leq 0.00005X^3 + 0.003X^2 + 0.08X + 52$$

where X represents the boiling point average value of the volatile compound in °C and Y represents the discharge temperature of the foamable phenolic resin composition in °C.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 070512 A (NITTO BOSEKI CO LTD) 22 March 2007 (2007-03-22) | 1,3-7 | INV. C08J9/14 C08L61/04 |
| Y | * paragraphs [0022], [0036], [0046], [0048], [0061], [0063]; claims 1,4,7,26-28 * | 2,8 | |
| Y | JP H04 364908 A (ASAHI ORGANIC CHEM IND) 17 December 1992 (1992-12-17) * paragraphs [0005], [0008], [0009], [0012], [0039] * | 8 | |
| Y | WO 2007/002703 A2 (HONEYWELL INT INC [US]; BOWMAN JAMES M [US]; WILLIAMS DAVID J [US]) 4 January 2007 (2007-01-04) * page 7, line 30 - page 8, line 18 * * page 23, line 15 - page 24, line 17; claims 24,28 * | 2 | |
| L | WO 2006/114777 A1 (KINGSPAN HOLDINGS IRL LTD [IE]; ZEGGELAAR RUUD [NL]) 2 November 2006 (2006-11-02) * page 3, line 28 - line 29 * * page 12, line 9 - line 29; table 1 * | 1 | TECHNICAL FIELDS SEARCHED (IPC) C08J C08L |

The present search report has been drawn up for all claims

| Place of search | Date of completion of the search | Examiner |
|---|---|---|
| The Hague | 7 January 2020 | Magrizos, Simeon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 19 21 1174

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2020

| Patent document cited in search report | Publication date | Patent family member(s) | | Publication date |
|---|---|---|---|---|
| JP 2007070512 A | 22-03-2007 | JP | 2007070512 A | 22-03-2007 |
| | | KR | 20070029060 A | 13-03-2007 |
| JP H04364908 A | 17-12-1992 | JP | 2845641 B2 | 13-01-1999 |
| | | JP | H04364908 A | 17-12-1992 |
| WO 2007002703 A2 | 04-01-2007 | CA | 2613090 A1 | 04-01-2007 |
| | | CN | 103497351 A | 08-01-2014 |
| | | DE | 09173778 T1 | 26-08-2010 |
| | | DE | 13166417 T1 | 21-08-2014 |
| | | DE | 13166420 T1 | 13-02-2014 |
| | | DK | 2154223 T3 | 15-04-2013 |
| | | DK | 2660282 T3 | 08-01-2018 |
| | | EP | 1893715 A2 | 05-03-2008 |
| | | EP | 2154223 A1 | 17-02-2010 |
| | | EP | 2706087 A2 | 12-03-2014 |
| | | ES | 2338519 T1 | 10-05-2010 |
| | | ES | 2438525 T1 | 17-01-2014 |
| | | ES | 2464528 T1 | 03-06-2014 |
| | | JP | 5709232 B2 | 30-04-2015 |
| | | JP | 5995921 B2 | 21-09-2016 |
| | | JP | 6310176 B2 | 11-04-2018 |
| | | JP | 2008546892 A | 25-12-2008 |
| | | JP | 2013064139 A | 11-04-2013 |
| | | JP | 2014139316 A | 31-07-2014 |
| | | JP | 2015013991 A | 22-01-2015 |
| | | JP | 2016148037 A | 18-08-2016 |
| | | JP | 2018048327 A | 29-03-2018 |
| | | JP | 2019194328 A | 07-11-2019 |
| | | KR | 20080033292 A | 16-04-2008 |
| | | KR | 20130042641 A | 26-04-2013 |
| | | KR | 20140116458 A | 02-10-2014 |
| | | KR | 20140119717 A | 10-10-2014 |
| | | KR | 20150070413 A | 24-06-2015 |
| | | KR | 20160018846 A | 17-02-2016 |
| | | KR | 20170019496 A | 21-02-2017 |
| | | KR | 20170102046 A | 06-09-2017 |
| | | KR | 20190003826 A | 09-01-2019 |
| | | MX | 338138 B | 01-04-2016 |
| | | MX | 359510 B | 28-09-2018 |
| | | MY | 155122 A | 15-09-2015 |
| | | MY | 158385 A | 30-09-2016 |
| | | PL | 2154223 T3 | 28-06-2013 |
| | | PT | 2154223 E | 02-04-2013 |
| | | TW | I408162 B | 11-09-2013 |
| | | TW | 201336906 A | 16-09-2013 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.** EP 19 21 1174

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2020

| Patent document cited in search report | Publication date | Patent family member(s) | | Publication date |
|---|---|---|---|---|
| | | TW | 201525034 A | 01-07-2015 |
| | | TW | 201533108 A | 01-09-2015 |
| | | TW | 201815923 A | 01-05-2018 |
| | | WO | 2007002703 A2 | 04-01-2007 |
| WO 2006114777 A1 | 02-11-2006 | AT | 454427 T | 15-01-2010 |
| | | CN | 101184808 A | 21-05-2008 |
| | | EP | 1885799 A1 | 13-02-2008 |
| | | ES | 2336925 T3 | 19-04-2010 |
| | | GB | 2440492 A | 30-01-2008 |
| | | PL | 1885799 T3 | 30-04-2010 |
| | | WO | 2006114777 A1 | 02-11-2006 |

EPO FORM P0459

For more details about this annex : see Official Journal of the European Patent Office, No. 12/82

page 2 of 2

**EP 3 640 288 A1**

**Patent documents cited in the description**

- JP 2013064139 A
- JP 2010522819 A